# EUROPÄISCHE PATENTSCHRIFT

(11) **EP 0 827 988 B1**
(45) Veröffentlichungstag und Bekanntmachung des Hinweises auf die Patenterteilung: **05.12.2001**
(21) Anmeldenummer: 97114806.9
(22) Anmeldetag: 27.08.1997
(51) Int. Cl.: C09B 67/22, C09B 67/38, D06P 1/18

(54) **Dispersionsfarbstoffmischungen**
Mixtures of disperse dyes
Mélanges de colorants de dispersion

(30) Priorität: 09.09.1996 DE 19636380
(43) Veröffentlichungstag der Anmeldung: 11.03.1998
(73) Patentinhaber: DyStar Textilfarben GmbH & Co. Deutschland KG, 60318 Frankfurt am Main (DE)
(72) Erfinder: Wanken, Klaus-Wilfried, 51373 Leverkusen (DE); Bühler, Karl-Ulrich, Dr., 63755 Alzenau (DE)

(56) Entgegenhaltungen:
- EP-A- 0 301 134
- EP-A- 0 376 086
- CH-A- 640 560
- DE-A- 3 508 904
- DE-A- 4 417 699
- GB-A- 2 030 169

## Beschreibung

Die Erfindung betrifft Dispersionsfarbstoffmischungen enthaltend C.I. Disperse Red 82, diese enthaltende Präparationen sowie ihre Verwendung zum Färben und Bedrucken von hydrophoben Materialien, insbesondere synthetischen Fasern.

Der Dispersionsfarbstoff C.I. Disperse Red 82, der der Formel (I) entspricht 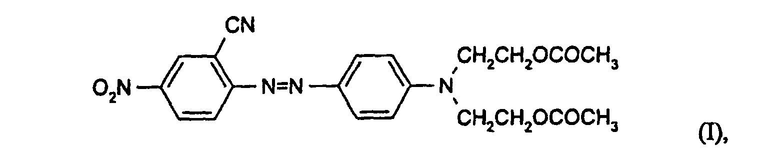 ist beispielsweise aus DE-A-29 36 489 bekannt und wird insbesondere zum Färben und Bedrucken von synthetischen Fasern verwendet. Disperfarbstoffmischungen sind ebenfalls in diesem Dokument erwähnt.

Will man diesen vom Farbton interessanten Farbstoff als Einzelfarbstoff zu einem trockenen Farbstoffpräparat wie Pulver oder Granulat verarbeiten, insbesondere durch Sprühtrocknung eines wäßrigen Sprühslurrys, so führen bei Anwendung der in der Praxis üblichen Trocknungsparameter diese oft zu einem getrockneten Produkt mit unbefriedigenden anwendungstechnischen Eigenschaften. So läßt sich dieses Produkt beispielsweise nur schlecht in Wasser redispergieren.

In der Regel sind bei den praxisüblichen Sprühtrocknern die Ein- und Austrittstemperaturen sowie die zur Trocknung zur Verfügung stehende Fallstrecke so aufeinander abgestimmt, daß optimale Produkte erhalten werden. Für C.I. Disperse Red 82 führt die Verwendung üblicher Sprühtrockner mit den üblichen Trocknungsparametern jedoch oft zu den genannten Nachteilen.

Beim Einsatz von C.I. Disperse Red 82 für Kreuzspul- und Baumfärbungen in sogenannten Färbeautoklaven, mit hohen Farbstoffkonzentrationen in der Färbeflotte, kommt es in der Praxis immer wieder zu Agglomerationen und Abfiltrationen während der Aufheizphase zur gewünschten Färbetemperatur von >130°C. Dies führt einerseits zu starken Durchflußschwankungen bei gleichzeitigem Druckanstieg im System, andererseits zu Abfiltrationen von Farbstoff und somit zu unegalen Färbungen und Abrieb. Des weiteren kann der teils starke Druckanstieg zum Sicherheitsabschalten der Färbeapparate führen.

Die Aufgabe der vorliegenden Erfindung lag nun darin C.I. Disperse Red 82 in sprühtrocknungsstabiler Form bereitzustellen, das die angegebenen Nachteile nicht mehr besitzt.

Es wurden nun neue Dispersionsfarbstoffmischungen gefunden, enthaltend C.I. Disperse Red 82 der Formel (I) 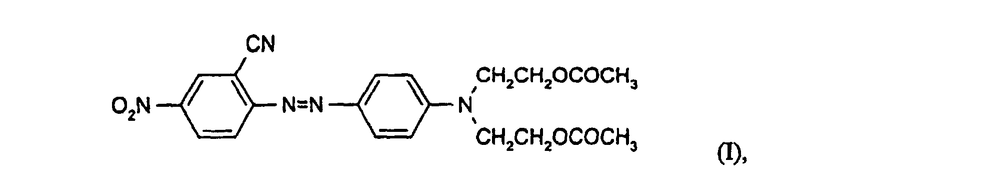 und wenigstens einen davon verschiedenen Farbstoff der Formel (II) 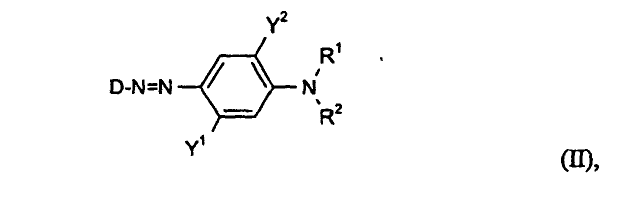 worin
- D: für 2-Chlor-4-nitrophenyl steht oder den Rest einer Diazokomponente aus der Gruppe 5,6-Dichlorbenzthiazolyl-2, 6,7-Dichlorbenzthiazolyl-2, 6-Nitrobenz-thiazolyl-2 oder 5-Nitrothiazolyl-2 bedeutet,
- Y¹: für Acylamino, insbesondere Acetamino und Propionylamino, Methoxy- oder Ethoxyacetamino, 2-Methoxy- oder -ethoxypropionylamino, 2-Chlorpropionylamino oder Methylsulfonylamino steht,
- Y²: für Wasserstoff, steht und
- R¹ und R²: unabhängig voneinander gegebenenfalls substituiertes C₁-C₄-Alkyl bedeuten.
Als bevorzugte Substituenten fiir die C₁-C₄-Alkylreste von R¹ und R² sind zu nennen: Acyloxy, insbesondere Acetoxy und Propionyloxy, CN, C₁-C₄-Alkoxy, insbesondere Methoxy, Ethoxy, Propoxy und Butoxy, Phenoxy, Phenyl und C₁-C₄-Alkoxycarbonyl, insbesondere Methoxycarbonyl und Ethoxycarbonyl.

Besonders bevorzugt stehen R¹ und R² unabhängig voneinander für Methyl, Ethyl, n-Propyl, n-Butyl, 2-Acetoxyethyl, 2-Propionyloxyethyl, 4-Acetoxybutyl, 4-Propionyloxybutyl, 2-Cyanethyl, 4-Cyanbutyl, 2-Methoxy-, -ethoxy-, -propoxy- oder -butoxyethyl, 4-Methoxy- oder -ethoxybutyl, 2-Methoxy- oder Ethoxycarbonylethyl, 3-Methoxy- oder -ethoxycarbonylpropyl, Benzyl, 2-Phenethyl oder 2-Phenoxyethyl.

Sofern einer der Reste R¹ oder R² Benzyl, 2-Phenylethyl oder 2-Phenoxyethyl bedeutet, hat der andere der beiden Reste vorzugsweise eine andere Bedeutung.

Die Farbstoffe der Formel (II) sind ebenfalls bekannt beispielsweise aus EP-A-684 287 oder EP-A-196 537.

Bevorzugte Mischungskomponenten der Formel (II) sind solche, worin
- Y¹: für Acetamino, Propionylamino, 2-Methoxy-propionylamino oder Methylsulfonylamino, insbesondere , Acetamino oder Propionylamino steht.

Bevorzugt sind auch Farbstoffmischungen enthaltend die erfindungsgemäße Farbstoffmischung mit einer Mischungskomponente der Formel (II), worin
- R¹ und R²: unabhängig voneinander 2-Acetoxyethyl, 2-Propionyloxyethyl, 2-Cyanethyl, 2-Methoxyethyl, 2-Ethoxyethyl, 2-Methoxycarbonylethyl, 2-Ethoxycarbonylethyl, Ethyl, n-Propyl, 2-Phenylethyl oder 2-Phenoxyethyl bedeuten.

Bevorzugt sind erfindungsgemäße Farbstoffmischungen, die
70 bis 99,5 Gew.-% C.I. Disperse Red 82 der Formel (I) und
30 bis 0,5 Gew.-% eines oder mehrerer von Formel (I) verschiedenen Farbstoffen der Formel (II)
enthalten, jeweils bezogen auf die Summe der Einzelfarbstoffe.

Besonders bevorzugte Farbstoffmischungen enthalten
80 bis 99,5 Gew.-% C.I. Disperse Red 82 der Formel (I) und
0,5 bis 20 Gew.-%, insbesondere 1 bis 15 %, besonders bevorzugt 2 bis 10 % eines oder mehrerer von Formel (I) verschiedener Farbstoffe der Formel (II),
jeweils bezogen auf die Summe der Einzelfarbstoffe.

In einer bevorzugten Ausführungsform enthält die erfindungsgemäße Mischung neben dem Farbstoff der Formel (I) 1 bis 3, insbesondere einen Farbstoff der Formel (II).

Die erfindungsgemäßen Farbstoffinischungen können aber auch noch weitere Farbstoffe in beliebiger Menge, vorzugsweise bis zu 10 %, bezogen auf das Gesamtgewicht der Farbstoffe der Formeln (I) und (II) enthalten.

Die Erfindung betrifft weiterhin Farbstoffpräparationen, die im allgemeinen enthalten:
- 10-60 Gew.-%: erfindungsgemäße Farbstoffmischung
- 10-80 Gew.-%: anionisches Dispergiermittel
- 0 bis 15 Gew.-%: nichtionogenes Dispergiermittel und gegebenenfalls weitere Zusätze wie Netzmittel, Entschäumer, Entstaubungsmittel sowie weitere Hilfsmittel.

Die erfindungsgemäßen Farbstoffmischungen bzw. diese enthaltende Farbstoffpräparationen können nach verschiedenen Verfahren hergestellt werden. Beispielsweise durch:
a) Mischen der separat hergestellten und separat formierten Einzelfarbstoffe, vorzugsweise vor dem gemeinsamen Trocknen,
b) gemeinsame Formierung der separat hergestellten Einzelfarbstoffe oder
c) gemeinsame Synthese der Farbstoffmischung.

Unter dem Begriff "Formieren" wird die Überführung eines in der Regel aus einem Herstellungsverfahren gewonnenen Farbstoffes in eine für die jeweils vorgesehene Anwendung gebräuchliche Form verstanden. Insbesondere wird darunter die Naßperlmahlung des Farbstoffes in Gegenwart von Wasser, Dispergator und gegebenenfalls weiterer Zusätze und gegebenenfalls anschließender Trocknung, insbesondere Sprühtrocknung, verstanden.

Bei der gemeinsamen Synthese der erfindungsgemäßen Farbstoffmischung werden die Diazokomponente von C.I. Disperse Red 82 und die des bzw. der gewünschten Mischungskomponenten der Formel (II) gemeinsam diazotiert und auf die Kupplungskomponente des C.I. Disperse Reds 82 und auf die des bzw. der gewünschten Mischungskomponenten der Formel (II) gekuppelt.
Bei der Herstellung der erfindungsgemäßen Farbstoffmischungen durch "gemeinsame Synthese" werden die Diazokomponente bzw. die Diazokomponenten in Mineralsäuren oder organischen Carbonsäuren, gegebenenfalls unter Wasserzusatz diazotiert. Organische Carbonsäuren sind beispielsweise Essigsäure oder Propionsäure. Mineralsäuren sind beispielsweise Phosphorsäure, Salzsäure und insbesonders Schwefelsäure.

Das Mischen der Farbstoffe erfolgt zweckmäßigerweise in geeigneten Mühlen, beispielsweise Kugel- oder Sandmühlen. Einzeln formierte Farbstoffe können aber auch durch Einrühren in Färbeflotten gemischt werden. Zur Herstellung bzw. Verbesserung des Dispersionsgrades von Einzelfarbstoffen oder Mischungen wird der zu mahlenden Farbstoffmischung oder der Reaktionsmischung vorzugsweise ein oder mehrere Dispergiermittel zugesetzt. Selbstverständlich kann die Teilchengröße der Farbstoffpartikel durch eine Mahlbehandlung z.B. Naßperlmahlung, sei es während der Synthese oder im Anschluß daran, entsprechend beeinflußt und auf einen gewünschten Wert eingestellt werden. Als Dispergiermittel zur Formierung der erfindungsgemäßen Farbstoffmischungen kommen insbesondere anionische und/oder nichtionogene in Frage. Bevorzugt sind dabei die anionischen Dispergiermittel und besonders bevorzugt ist eine Mischung aus anionischen und nichtionogenen Dispergiermitteln.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäuren, Kondensationsprodukte aus gegebenenfalls substituiertem Phenol mit Formaldehyd und Natriumbisulfit. Weiterhin kommen vor allem Ligninsulfonate in Betracht, z.B. solche, die nach dem Sulfit- oder Kraft-Verfahren gewonnen werden. Vorzugsweise handelt es sich um Produkte die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, Carbonsäureamiden und Harzsäuren. Hierbei handelt es sich z.B. um Ethylenoxidaddukte aus der Klasse der Umsetzungsprodukte von Ethylenoxid mit:
a) gesättigten und/oder ungesättigten Fettalkoholen mit 6 bis 20 C-Atomen oder
b) Alkylphenolen mit 4 bis 12 C-Atomen im Alkylrest oder
c) gesättigten und/oder ungesättigten Fettaminen mit 14 bis 20 C-Atomen oder
d) gesättigten und/oder ungesättigten Fettsäuren mit 14 bis 20 C-Atomen oder
e) hydrierte und/oder unhydrierte Harzsäuren.

Als Ethylenoxid-Addukte kommen insbesondere die unter a) bis e) genannten alkylierbaren Verbindungen mit 5 bis 30 Mol Ethylenoxid in Frage.

Geeignete Netzmittel sind beispielsweise C₆-C₁₀-Alkyl-Phosphate oder Additionsprodukte aus C₆-C₁₈-Fettalkoholen und Ethylen- und/oder Propylenoxid oder Gemische solcher Alkoxylierungsprodukte.

Geeignete Entschäumer sind beispielsweise Tributylphosphat oder 2,4,7,9-Tetramethyl-5-decin-4,7-diol.

Geeignete Entstaubungsmittel sind beispielsweise solche auf Mineralölbasis.

Unter weiteren Hilfsmitteln werden beispielsweise Fungizide, wie z.B. Natrium-o-phenylphenolat oder Natriumchlorphenolat, Antrocknungsverhinderer sowie solche, die als Oxidationsmittel wirken, wie z.B. Natrium-m-nitrobenzolsulfonat, Frostschutzmittel oder Hydrophilierungsmittel usw. verstanden.

### Bevorzugte feste Farbstoffpräparationen enthalten

| | |
|---|---|
| 10 bis 50 Gew.-% | erfindungsgemäße Farbstoffmischung, |
| 10 bis 80 Gew.-% | Ligninsulfonate, insbesondere Kraft- und Sulfitlignine, |
| 0 bis 20 Gew.% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0 bis 1,5 Gew.-% | Netzmittel, |
| 0,1 bis 1 Gew.-% | Entschäumer, |
| 0,2 bis 1,5 Gew.-% | Entstaubungsmittel, |

jeweils bezogen auf die gesamte Präparation.

### Bevorzugte flüssige Farbstoffpräparationen enthalten

| | |
|---|---|
| 10 bis 30 Gew.-% | erfindungsgemäße Farbstoffmischung, |
| 10 bis 30 Gew.-% | Ligninsulfonate, insbesondere Kraft- und Sulfitlignine, |
| 0 bis 10 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0,1 bis 1 Gew.-% | Entschäumer, |
| 0,1 bis 0,5 Gew.-% | Konservierungsmittel, |
| 0 bis 15 Gew.-% | Kälteschutzmittel, insbesondere Glycerin und |
| 79,8 bis 10 Gew.-% | Wasser, |

jeweils bezogen auf die gesamte Präparation.

Als Konservierungsmittel kommen beispielsweise folgende in Frage: Isothiazolidone beispielsweise 1,2-Benzisothiazol-3-(2H)-on, Chlor-2-methyl-4-isothiazolin-3-on oder 2-Methyl-4-isothiazolin-3-on, Pentachlorphenolnatrium, 1,3,5-Triethylolhexahydro-s-triazin oder Gemische davon.

Das Färben des genannten Fasergutes mit den erfindungsgemäßen Farbstoffmischungen sowie den jeweiligen Farbstoffpräparationen erfolgt in an sich bekannter Weise, vorzugsweise aus wäßriger Suspension, gegebenenfalls in Gegenwart von Carriern im allgemeinen bei 80 bis 110°C nach dem Ausziehverfahren oder nach dem HT-Verfahren im Färbeautoklav bei 110 bis 140°C. Man erhält auf diese Weise sehr farbstarke rote Färbungen mit sehr guten Echtheitseigenschaften. In den bei den obigen Applikationen eingesetzten Färbeflotten sollten die erfindungsgemäßen Präparationen der Farbstoffmischungen vorzugsweise in möglichst feiner Verteilung vorliegen. Die Feinverteilung der Farbstoffe wird dadurch gewährleistet, daß man die Einzelfarbstoffe bzw. die Farbstoffmischungen zusammen mit Dispergiermitteln in einem flüssigen Medium, vorzugsweise in Wasser, aufschlämmt und die Farbstoffmischung der Einwirkung von Scherkräften aussetzt, wobei die ursprünglich vorhandenen Farbstoffteilchen mechanisch soweit zerkleinert werden, daß eine optimale spezifische Oberfläche erreicht wird und die Sedimentation des Farbstoffs vermieden wird. Die Teilchengröße der Farbstoffe liegt im allgemeinen zwischen 0,1 und 5 µm, vorzugsweise zwischen 0,5-1 µm. Die bei dem Mahlvorgang mitverwendeten Dispergiermittel können die bereits im Zusammenhang mit der Synthese und der Herstellung der Farbstoffmischung genannten nichtionischen oder anionischen Dispergiermittel sein.

Für die meisten Anwendungsbereiche werden feste Präparationen (Pulver- bzw. Granulatpräparationen) bevorzugt.

Ein bevorzugtes Herstellungsverfahren für feste Farbstoffzubereitungen besteht darin, daß den oben beschriebenen flüssigen Farbstoffdispersionen die Flüssigkeit, insbesondere das Wasser, entzogen wird, z.B. durch Vakuumtrocknung, Gefriertrocknung, durch Trocknung auf Walzentrocknern, vorzugsweise aber durch Sprühtrocknung.

Zur Herstellung der erfindungsgemäßen Farbstoffmischungen in feinverteilter Form kann folgendermaßen vorgegangen werden: beispielsweise werden 10 bis 50 Teile einer Farbstoffmischung mit 10 bis 80 Teilen Ligninsulfonat, 0 bis 20 Teilen Kondensationsprodukt aus Naphthalinsulfonsäuren und Formaldehyd, 10 bis 0 Teilen nichtionogenes Dispergiermittel, 0 bis 1,5 Teilen Netzmittel, 0,1 bis 1,0 Teilen Entschäumer, 0,2 bis 1,5 Teilen Entstaubungsmittel in einer Perlmühle mit soviel Wasser gemahlen, daß die Dispersion einen Feststoffgehalt von 5 bis 60 % aufweist. (Teile = Gewichtsteile).

Bei der Herstellung der festen Farbstoffpräparationen, kann vor der Trocknung noch ein Entstaubungsmittel, vorzugsweise in einer Menge von 0,1 bis 1,5 Teilen, der zu versprühenden Suspension zugegeben werden.

Die erfindungsgemäßen Farbstoffmischungen, insbesondere in Form ihrer festen Präparationen benetzen beim Ansetzen von Färbe- und Klotzflotten sowie auch von Druckteigen besser als C.I. Disperse Red 82-Farbstoff alleine und lassen sich rasch und ohne aufwendiges manuelles oder maschinelles Rühren dispergieren. Die Flotten und Druckteige sind homogen und lassen sich in modernen Farbküchen problemlos verarbeiten, ohne die Düsen der Dosierautomaten zu verstopfen.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart der Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Ein weiterer Vorteil ist der, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die Sprühtrocknung eines die erfindungsgemäße Farbstoffmischung enthaltenden Slurrys erfolgt vorzugsweise in üblichen Sprühtrocknern bei Trocknereintrittstemperaturen von 130 bis 160°C, vorzugsweise von 140 bis 150°C und Austrittstemperaturen von 50 bis 80°C, vorzugsweise von 60 bis 70°C.

Als nitrosierende Agentien werden Alkalinitrite, wie beispielsweise Natriumnitrit in fester Form oder als wäßrige Lösung, oder aber Nitrosylschwefelsäure, eingesetzt. Die Diazotiertemperatur liegt vorzugsweise bei -5 bis 30°C, insbesondere bei 0 bis 20°C.

Die Kupplung erfolgt im allgemeinen durch Zugabe der Diazolösung zur Lösung oder Suspension des Kupplers im Temperaturbereich bei 0 bis 35°C. Der pH-Wert des vorgelegten Kupplers ist von der Kupplung vorzugsweise schwach sauer. Der Zusatz eines Puffers, wie beispielsweise Natriumacetat, kann vorteilhaft sein.

Es ist auch möglich, die Kupplung durchzuführen, indem man den Kuppler als schwach saure, beispielsweise essigsaure Lösung oder Suspension zur Diazolösung gibt. Auch hier kann der Zusatz eines Puffers vorteilhaft sein.

Zur Reduzierung der Filtrierzeit und der Erhöhung des Farbstoffgehaltes im Filterkuchen kann es vorteilhaft sein, den Farbstoff nach der Kupplung im Kupplungsansatz auf Temperaturen von 50 bis 130°C zu erwärmen. Zweckmäßigerweise wird auch hier der pH-Wert des Ansatzes eingestellt auf einen Wert von 4 bis 8.

Die oben beschriebenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, soweit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll die Farbstoffmischung für den Textildruck herangezogen werden, so werden die erforderlichen Mengen der Farbstoffeinstellungen zusammen mit Verdickungsmitteln, wie z.B. Alkali-Alginaten oder dgl., und gegebenenfalls weiteren Zusätzen, wie z.B. Fixierbeschleunigern, Netzmitteln und Oxidationsmitteln, zu Druckpasten verknetet.

Die Erfindung betrifft weiterhin die Verwendung der erfindungsgemäßen Farbstoff-mischungen zum Färben und Bedrucken von hydrophoben synthetischen Materialien, vorzugsweise Fasern, insbesondere von Textilien aus aromatischen Polyestern oder von Mischtextilien aus aromatischen Polyestern und Celluloseestern oder aus aromatischen Polyestem und Wolle. Sie zeichnen sich bei gutem Echtheitsniveau durch einen klaren, brillanten Farbton aus.

Als hydrophobe synthetische Materialien kommen z.B. in Betracht: Cellulose-2½-acetat, Cellulosetriacetat, Polyamide und hochmolekulare Polyester. Vorzugsweise werden die erfindungsgemäßen Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, wie insbesondere Wolle oder Cellulose, eingesetzt.

Die erfindungsgemäßen Farbstoff-Mischungen sind auch im Gemisch mit anderen Dispersionsfarbstoffen vorzüglich zum Färben und Bedrucken von hydrophoben synthetischen Materialien geeignet.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffmischungen kann in an sich bekannter Weise erfolgen, beispielsweise nach Art einer Spinnfärbung, vorzugsweise aber aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird.

Hierzu werden die Farbstoffe auf allgemein bekannte Weise zu Färbepräparaten verarbeitet, z.B. durch Mahlen in Wasser in Gegenwart von Dispergier- und/oder Füllmitteln. Mit den gegebenenfalls im Vakuum oder durch Zerstäuben getrockneten Präparaten kann man nach Zugabe von Wasser in sogenannter kurzer oder langer Flotte färben bzw. kann man klotzen oder bedrucken.

Das Bedrucken der genannten Materialien kann in an sich bekannter Weise so durchgeführt werden, daß die erfindungsgemäßen Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf oder Trockenhitze behandelt wird. Man erhält auf diese Weise sehr farbstarke rote Färbungen und Drucke mit sehr guten Echtheiten, insbesondere mit sehr guten Licht-, Reib-, Thermofixier-, Wasch-, Wasser- und Thermomigrierechtheiten.

Die erfindungsgemäßen Farbstoffmischungen eignen sich auch zum Färben der vorstehend aufgeführten hydrophoben Materialien aus organischen Lösungsmitteln nach den hierbei bekannten Methoden und zum Färben in der Masse.

Die Überlegenheit der erfindungsgemäßen Farbstoffmischungen wird besonders deutlich beim Färben aus wäßrigem Färbebad unter modernen Praxisbedingungen.

Die genannten modernen Praxisbedingungen sind gekennzeichnet durch hohe Wickeldichten bei Kreuzspul- und Baumfärbungen, kurze Flottenverhältnisse, also hohe Farbstoffkonzentrationen sowie hohe Scherkräfte in der Färbeflotte, bedingt durch hohe Pumpenleistungen. Auch unter diesen Bedingungen neigen die erfindungsgemäßen Farbstoffmischungen nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit den erfindungsgemäßen Farbstoffmischungen schließlich wird ebenfalls ein homogenes, stippenfreies Warenbild erhalten.

Die Erfindung wird durch die folgenden Beispiele näher beschrieben, jedoch nicht eingeschränkt. In den Beispielen bedeuten Teile "Gewichtsteile" und Prozente "Gewichtsprozente", sofern nicht anders angegeben.

### Beispiel 1

a) 271 Teile Preßkuchen des Farbstoffs C.I. Disperse Red 82 und 14 Teile Preßkuchen des Farbstoffs der Formel 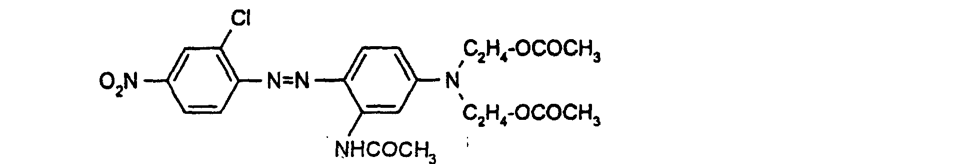 jeweils mit einem Farbstoffgehalt von 35 %, wurden mit 120 g eines Ligninsulfonates in einer Sandmühle bis zu einer Feinverteilung von 90 % kleiner als 1 µm gemahlen. Der erhaltene Mahlteig wurde in einem Sprühtrockner bei einer Eingangstemperatur von 140°C und einer Ausgangstemperatur von 60°C getrocknet. Man erhielt so ein 45 %iges Farbstoffpulver.
   Das erhaltene Farbstoffpulver war frei von verklebten, agglomerierten Partikeln und ließ sich problemlos in Wasser mit der erforderlichen Feinverteilung redispergieren.
b) 0,5 g des Farbstoffpulvers aus Beispiel 1a) wurden in 500 ml Wasser eingerührt. In die so erhaltene Färbeflotte wurden 10 g eines Polyestergarnes, das auf einer Kreuzspule dicht gewickelt war, bei 60°C eingebracht und unter Umpumpen der Färbeflotte von innen nach außen innerhalb von 30 min auf 130°C erwärmt. In der Aufheizphase, speziell oberhalb 100°C, konnten keine Unregelmäßigkeiten wie Ausfällungen, Rekristallisationen und dadurch verursachte Durchflußverringerung und Druckanstieg festgestellt werden. Nach 30-minütigem Färben bei dieser Temperatur wurde das Färbebad abgekühlt, und das auf der Kreuzspule gewickelte Garn gespült und getrocknet. Die Kreuzspule zeigte an ihrer Innenseite keine Ablagerungen und es ließen sich keine ausgefallenen, d.h. im Färbebad nicht vollständig dispergierten Farbstoffpartikel von ihrer Oberfläche abreiben. Wurde das gefärbte Garn abgespult und zu einem Strumpf verstrickt, so waren die Enden dieses Strumpfes zueinander farbstärkegleich, d.h. das Garn auf der Kreuzspule war innen und außen homogen gefärbt.

### Vergleich

Wurde analog zu den Angaben in Beispiel 1a) ein 45 %iges Farbstoffpulver nur mit C.I. Disperse Red 82 hergestellt und entsprechend den Angaben des Beispiels 1b) gefärbt, so erhielt man eine Kreuzspulfärbung mit deutlichen Farbstoffablagerungen, die sich leicht abreiben ließen. Ein aus dem Garn hergestellter Strumpf war nicht endengleich, also inhomogen gefärbt.

## Patentansprüche

1. Dispersionsfarbstoffmischungen enthaltend einen Farbstoff der Formel (I) 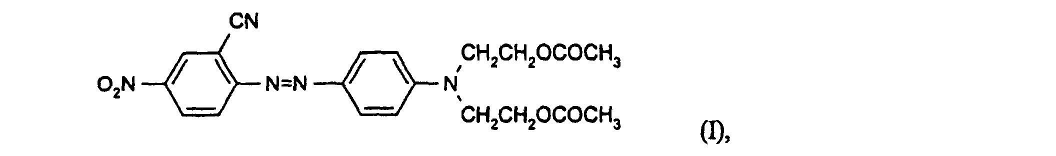 und wenigstens einen davon verschiedenen Farbstoff der Formel (II) 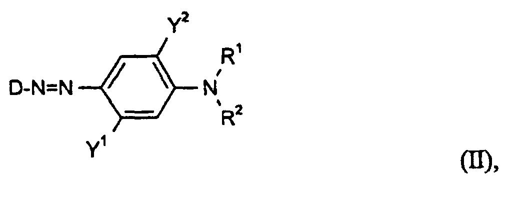 worin
D für 2-Chlor-4-nitrophenyl steht oder den Rest einer Diazokomponente aus der Gruppe 5,6-Dichlorbenzthiazolyl-2, 6,7-Dichlorbenzthiazolyl-2, 6-Nitrobenzthiazolyl-2 oder 5-Nitrothiazolyl-2 bedeutet,
Y¹ für Acylamino, Methoxy oder Ethoxyacetamino, 2-Methoxy- oder -Ethoxypropionylamino, 2-Chlorpropionylamino oder Methylsulfonyl-amino steht,
Y² für Wasserstoff steht und
R¹ und R² unabhängig voneinander gegebenenfalls substituiertes C₁-C₄₋Alkyl bedeuten.

2. Dispersionsfarbstoffmischungen gemäß Anspruch 1 enthaltend wenigstens einen Farbstoff der Formel (II), worin
D den Rest einer Diazokomponente aus der Gruppe 5,6-Dichlorbenzthiazolyl-2, 6,7-Dichlorbenzthiazolyl-2, 6-Nitrobenzthiazolyl-2 oder 5-Nitrothiazolyl-2 bedeutet,
Y¹ für Acetamino, Propionylamino, Methoxy- oder Ethoxyacetamino, 2-Methoxy- oder -Ethoxypropionylamino, 2-Chlorpropionylamino oder Methylsulfonylamino steht und,
R¹ und R² unabhängig voneinander für Methyl, Ethyl, n-Propyl, n-Butyl, 2-Acetoxyethyl, 2-Propionyloxyethyl, 4-Acetoxybutyl, 4-Propionyloxybutyl, 2-Cyanethyl, 4-Cyanbutyl, 2-Methoxy-, 2-Ethoxy, 2-Propoxy- oder 2-butoxyethyl, 4-Methoxy- oder 4-ethoxybutyl, 2-Methoxy- oder 2-Ethoxycarbonylethyl, 3-Methoxy- oder 3-ethoxycarbonylpropyl, Benzyl, 2-Phenethyl oder 2-Phenoxyethyl stehen.

3. Farbstoffmischungen gemäß Anspruch 1, enthaltend den Farbstoff der Formel (II),
worin
D für 2-Chlor-4-nitrophenyl steht,
Y¹ für Acetamino, Propionylamino, 2-Methoxy-propionylamino oder Methylsulfonylamino, steht .

4. Farbstoffpräparationen enthaltend
| | |
|---|---|
| 10-60 Gew.-% | Farbstoffmischung gemäß Anspruch 1 |
| 10-80 Gew.-% | anionisches Dispergiermittel und |
| 0 bis 15 Gew.-% | nichtionogenes Dispergiermittel. |

5. Farbstoffpräparationen gemäß Anspruch 3, **dadurch gekennzeichnet, daß** sie fest sind und enthalten:
| | |
|---|---|
| 10 bis 50 Gew.-% | Farbstoffmischung gemäß Anspruch 1 |
| 10 bis 80 Gew.-% | Ligninsulfonate, insbesondere Kraft- und Sulfitlignine |
| 0 bis 20 Gew.-% | eines Kondensationsproduktes aus Naphthalinsulfonsäure und Formaldehyd, |
| 0 bis 10 Gew.-% | nichtionogenes Dispergiermittel, insbesondere Additionsprodukte von Harzsäuren und Ethylenoxid und/oder Propylenoxid, |
| 0 bis 1,5 Gew.-% | Netzmittel, |
| 0,1 bis 1 Gew.-% | Entschäumer, |
| 0,2 bis 1,5 Gew.-% | Entstaubungsmittel, |
jeweils bezogen auf die gesamte Präparation.

6. Verfahren zur Herstellung der Farbstoffpräparationen gemäß Anspruch 4 durch:
a) Mischen der separat hergestellten und separat formierten Einzelfarbstoffe
b) gemeinsame Formierung der separat hergestellten Einzelfarbstoffe oder
c) gemeinsame Synthese der Farbstoffmischung.

7. Verwendung der Farbstoffinischungen gemäß Anspruch 1 zum Färben und Bedrucken von hydrophoben synthetischen Materialien, vorzugsweise Fasern, insbesondere von Textilien aus aromatischen Polyestern oder aus Mischtextilien aus aromatischen Polyestern und Celluloseestem oder von aromatischen Polyestem und Wolle.

8. Hydrophobe synthetische Materialien, gefärbt mit wenigstens einer Farbstoffmischung gemäß Anspruch 1.

## Claims

1. Disperse dyestuff mixtures comprising a dyestuff of the formula (I) 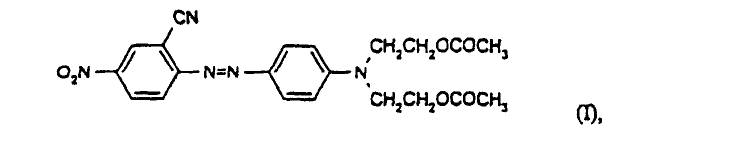 and at least one dyestuff which differs therefrom, of the formula (II) 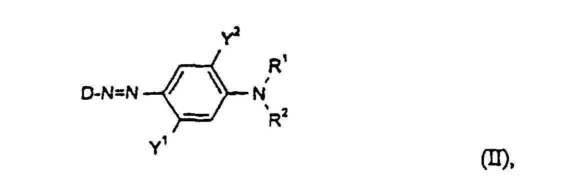 wherein
D represents 2-chloro-4-nitrophenyl or denotes the radical of a diazo component from the group consisting of 5,6-dichlorobenzothiazol-2-yl, 6,7-dichlorobenzothiazol-2-yl, 6-nitrobenzothiazol-2-yl and 5-nitrothiazol-2-yl,
Y¹ represents acylamino, methoxy- or ethoxyacetamino, 2-methoxy- or -ethoxypropionylamino, 2-chloropropionylamino or methylsulfonylamino,
Y² represents hydrogen, and
R¹ and R² independently of one another denote optionally substituted C₁-C₄-alkyl.

2. Disperse dyestuff mixtures according to Claim 1, comprising at least one dyestuff of the formula (II) wherein
D denotes the radical of a diazo component from the group consisting of 5,6-dichlorobenzothiazol-2-yl, 6,7-dichlorobenzothiazol-2-yl, 6-nitrobenzothiazol-2-yl or 5-nitrothiazol-2-yl.
Y¹ represents acetamino, propionylamino, methoxy or ethoxyacetamino, 2-methoxy- or ethoxypropionylamino, 2-chloropropionylamino or methylsulphonylamino, and
R¹ and R² independently of one another represent methyl, ethyl, n-propyl, n-butyl, 2-acetoxyethyl, 2-propionyloxyethyl, 4-acetoxybutyl, 4-propionyloxybutyl, 2-cyanoethyl, 4-cyanobutyl, 2-methoxy-, 2-ethoxy-, 2-propoxy- or 2-butoxyethyl, 4-methoxy- or 4-ethoxybutyl, 2-methoxy- or 2-ethoxycarbonylethyl, 3-methoxy- or 3-ethoxycarbonylpropyl, benzyl, 2-phenethyl or 2-phenoxyethyl.

3. Dyestuff mixtures according to Claim 1, comprising the dyestuff of the formula (II) wherein
D represents 2-chloro-4-nitrophenyl,
Y¹ represents acetamino, propionylamino, 2-methoxypropionylamino or methylsulphonylamino,

4. Dyestuff preparations comprising
| | |
|---|---|
| 10-60% by weight | of dyestuff mixture according to Claim 1 |
| 10-80% by weight; | of anionic dispersing agent and |
| 0 to 15% by weight | of nonionic dispersing agent. |

5. Dyestuff preparations according to Claim 3,
**characterized in that** they are solid and comprise
| | |
|---|---|
| 10 to 50% by weight | of dyestuff mixture according to Claim 1, |
| 10 to 80% by weight | of ligninsulphonates, in particular kraft and sulphite lignins, |
| 0 to 20% by weight | of a condensation product of naphthalenesulphonic acid and formaldehyde, |
| 0 to 10% by weight | of nonionic dispersing agent, in particular addition products of resin acids and ethylene oxide and/or propylene oxide, |
| 0 to 1.5% by weight | of wetting agent, |
| 0.1 to 1% by weight | of defoamer and |
| 0.2 to 1.5% by weight | of dust removal agent, in each case based on the total preparation |

6. Process for the preparation of the dyestuff preparations according to Claim 4 by:
a) mixing the separately prepared and separately finished individual dyestuffs,
b) joint finishing of the separately prepared individual dyestuffs or
c) joint synthesis of the dyestuff mixture.

7. Use of the dyestuff mixtures according to Claim 1 for dyeing and printing hydrophobic synthetic materials, preferably fibres, in particular textiles aromatic polyesters or mixed textiles of aromatic polyesters and cellulose esters or aromatic polyesters and wool.

8. Hydrophobic synthetic materials dyed with at least one dyestuff mixture according to Claim 1.

## Revendications

1. Mélanges de colorants en dispersion, contenant un colorant de formule (I) 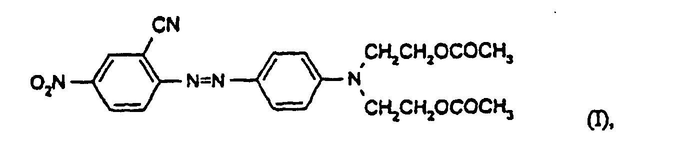 et au moins un colorant différent de celui-ci, de formule (II) 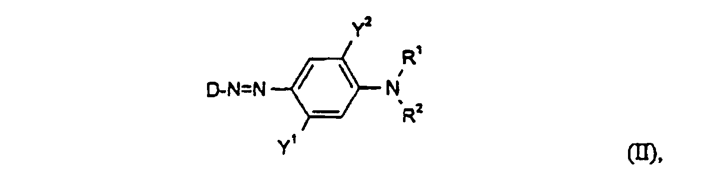 dans laquelle
D représente le groupe 2-chloro-4-nitrophényle ou le reste d'un composant diazotable choisi parmi le 5,6-dichlorobenzothiazolyle-2, le 6,7-dichlorobenzothiazolyle-2, le 6-nitrobenzothiazolyle-2 et le 5-nitrothiazolyle-2,
Y¹ représente un groupe acylamino, méthoxy ou éthoxyacétamino, 2-méthoxy- ou -éthoxypropionylamino, 2-chloropropionylamino ou méthylsulfonylamino,
Y² représente un atome d'hydrogène et
R¹ et R² représentent, indépendamment l'un de l'autre, un groupe alkyle en C₁-C₄ éventuellement substitué.

2. Mélanges de colorants en dispersion selon la revendication 1, contenant au moins un colorant de formule (II) dans lequel
D représente le reste d'un composant diazotable choisi parmi le 5,6-dichlorobenzothiazolyle-2, le 6,7-dichlorobenzothiazolyle-2, le 6-nitrobenzothiazolyle-2 et le 5-nitrothiazolyle-2,
Y¹ représente le groupe acétamino, propionylamino, méthoxy- ou éthoxyacétamino, 2-méthoxy- ou - éthoxypropionylamino, 2-chloropropionylamino ou méthyl sulfonylamino et
R¹ et R² représentent, indépendamment l'un de l'autre, le groupe méthyle, éthyle, n-propyle, n-butyle, 2-acétoxyéthyle, 2-propionyloxyéthyle, 4-acétoxybutyle, 4-propionyloxybutyle, 2-cyanoéthyle, 4-cyanobutyle, 2-méthoxy-, 2-éthoxy-, 2-propoxy- ou 2-butoxyéthyle, 4-méthoxy- ou 4-éthoxybutyle, 2-méthoxy- ou 2-éthoxycarbonyléthyle, 3-méthoxy- ou 3-éthoxycarbonylpropyle, benzyle, 2-phénéthyle ou 2-phénoxyéthyle.

3. Mélanges de colorants selon la revendication 1, contenant un colorant de formule (II) dans lequel
D représente le groupe 2-chloro-4-nitrophényle,
Y¹ représente le groupe acétamino, propionylamino, 2-méthoxypropionylamino ou méthylsulfonylamino.

4. Compositions tinctoriales contenant
10-60 % en poids d'un mélange de colorant selon la revendication 1,
10-80 % en poids d'un dispersant anionique et
0 à 15 % en poids d'un dispersant non ionique.

5. Compositions tinctoriales selon la revendication 3, **caractérisées en ce qu'**elles sont solides et contiennent :
10 à 50 % en poids d'un mélange de colorants selon la revendication 1,
10 à 80 % en poids de ligninesulfonates, en particulier de lignine kraft et de lignine au sulfite,
0 à 20 % en poids d'un produit de condensation d'acide naphtalènesulfonique et de formaldéhyde,
0 à 10 % en poids d'un dispersant non ionique, en particulier de produits d'addition d'acides résiniques et d'oxyde d'éthylène et/ou d'oxyde de propylène,
0 à 1,5 % en poids d'agent mouillant,
0,1 à 1 % en poids d'antimousse,
0,2 à 1,5 % en poids de dépoussiérant,
dans chaque cas par rapport à la composition totale.

6. Procédé pour la préparation des compositions tinctoriales selon la revendication 4, par :
a) mélange des colorants individuels préparés séparément et mis en forme séparément,
b) mise en forme ensemble des colorants préparés séparément ou
c) synthèse simultanée du mélange de colorants.

7. Utilisation des mélanges de colorants selon la revendication 1, pour la teinture et l'impression de matériaux synthétiques hydrophobes, de préférence de fibres, en particulier de textiles de polyesters aromatiques ou de textiles mélangés à base de polyesters aromatiques et d'esters de cellulose ou de polyesters aromatiques et de laine.

8. Matériaux synthétiques hydrophobes teints avec au moins un mélange de colorants selon la revendication 1.
